# EUROPEAN PATENT SPECIFICATION

(11) **EP 3 777 524 B1**
(45) Date of publication and mention of the grant of the patent: **29.05.2024**
(21) Application number: 19786174.3
(22) Date of filing: 09.04.2019
(51) Int. Cl.: A01G 31/06, A01G 31/00, A01G 22/05, A01G 18/62

(54) **METHOD FOR GROWING PLANT OR FUNGUS**
VERFAHREN ZUM ZÜCHTEN VON PFLANZEN ODER PILZEN
PROCÉDÉ DE CULTURE DE PLANTE OU DE CHAMPIGNON

(30) Priority: 09.04.2018 WO PCT/JP2018/014958
(43) Date of publication of application: 17.02.2021
(73) Proprietor: Plants Laboratory, Inc., Minato-ku Tokyo 107-0062 (JP)
(72) Inventor: YUKAWA, Atsuyuki, Tokyo 107-0062 (JP)
(74) Representative: Uexküll & Stolberg
(86) International application number: PCT/JP2019/015511
(87) International publication number: WO 2019/198726

(56) References cited:
- EP-A1- 3 254 557
- EP-A2- 0 004 450
- JP-A- H0 947 170
- JP-A- H03 112 422
- JP-A- 2005 021 065
- JP-A- 2006 262 750
- JP-A- 2010 099 008
- JP-A- 2015 136 359
- US-A1- 2012 124 907

## Description

The present invention relates to a growing method, and more particularly to a growing method using an apparatus for growing a plant or a fungus used in hydroponic cultivation of growth of a fungus such as a mushroom.

### BACKGROUND OF THE INVENTION

Provided are various plant cultivation apparatuses used in hydroponic cultivation. For example, Patent Document 1 describes a plant cultivation apparatus including a cultivation tray, a cultivation pot, a cultivation frame, a liquid fertilizer hose, and a lighting fixture.

The cultivation tray in the plant cultivation apparatus includes an elongated container with an open upper surface and a lid covering the upper surface of the container. Multiple pot insertion holes are formed in a row or in a staggered pattern on the lid. The cultivation pot is a bottomed tubular container for planting a post-seedling plant. A slit for exposing roots R of the plant is formed on a lower side of a tubular portion of the cultivation pot. The cultivation pot is inserted in a pot insertion hole which is formed on the lid of the cultivation tray.

The cultivation frame includes struts, first beams, second beams and rails; and the cultivation trays are arranged in multiple layers. Three struts are vertically arranged in an opposing manner along two parallel aisles, respectively. Therefore, the cultivation frame is a frame assemblied by a total of six struts in a rectangular shape from a top view. A space between three struts in the direction along each aisle is wider, while a space between two struts in the other direction is narrower. The first beams are arranged on the narrowly spaced struts. The second beams are arranged on the widely spaced struts. Multiple first beams and second beams are provided at the same position in the height direction of the struts. Rails are respectively provided near two ends of a pair of opposing second beams. Two ends of the bottom of a cultivation tray are carried on two rails.

The liquid fertilizers are supplied by a liquid fertilizer hose to the container of the uppermost cultivation tray. The liquid fertilizer are supplied by another liquid fertilizer hose from the bottom plate of an upper cultivation tray into the container of a lower cultivation tray. By means of the lid, even if a leaf protruding from the cultivation pot hangs down, the leaf will not reach the liquid fertilizer. The lighting fixture is provided above the cultivation tray.

In such a cultivation apparatus for plant, a cultivation pot in which a germinated plant is planted is inserted into a pot insertion hole formed on the lid of the cultivation tray. The plant planted in the cultivation pot grows by absorbing liquid fertilizer through roots R and absorbing light from the lighting fixture through leaves.

In addition, Patent Document 2 describes a bed expansion apparatus of a fungal bed cultivation shed for fungal bed cultivation of mushrooms. The bed expansion apparatus of the fungal bed cultivation shed includes: a shed frame having multiple horizontal frames and vertical frames, and fungal beds placed on the horizontal frames.

Patent Document 1: Japanese Patent Application Laid-Open No. 2015-136359 Patent Document 2: Registered Utility Model No. 3187478

EP 3 254 557 A1 and US 2012/124907 A1 illustrate alternative hydroponics growing apparatus.

### SUMMARY OF THE INVENTION

In the plant cultivation apparatus described in Patent Document 1, the struts erect along the aisles, and the cultivation trays are placed on the inner side of the struts. Therefore, with respect to the plant cultivation apparatus, when plants growing in the cultivation trays are trimmed, the struts act as an obstacle therefor.

In the bed expansion apparatus of the fungal bed cultivation shed described in Patent Document 2, the vertical frames are erected along the aisles, and the fungal beds are placed on the position which is even inner than the vertical frames. Therefore, with respect to the bed expansion apparatus of the fungal bed cultivation shed, when mushrooms growing in the fungus beds are trimmed, the vertical frames act as an obstacle therefor. The vertical frames are equivalent to the struts of Patent Document 1.

The subject of the present invention is to provide a growing method using an apparatus for growing a plant or a fungus, in which struts provided for hydroponic cultivation and/or growth of a fungus are no longer an obstacle.

In order to solve the above problem, the present invention is achieved according to the appended claims.

### BRIEF DESCRIPTION OF THE DRAWINGS

FIG 1 is a schematic perspective view showing an embodiment of an apparatus for growing a plant or a fungus according to the present invention.
FIG 2 shows an embodiment of an apparatus for growing a plant or a fungus according to the present invention, (a) is a cross-sectional front view, and (b) is a cross-sectional side view.
FIG 3 is an enlarged cross-sectional perspective view of a main part showing an embodiment of an apparatus for growing a plant or a fungus according to the present invention.
FIG 4 is a schematic perspective view for illustrating a variation of an embodiment of an apparatus for growing a plant or a fungus according to the present invention, (a) shows a state in which a lid is installed on a growing component, and (b) shows a state in which the lid is removed from the growing component.
FIG 5 is a view for illustrating a variation of an embodiment of an apparatus for growing a plant or a fungus according to the present invention, (a) shows a method for installing multiple plates as a lid to a growing component, (b) shows a top view of the growing component in a state where the multiple plates are installed to the growing component as the lid, and (c) shows the structure of the X-X line cross section of (b).
FIG 6 is a view for illustrating a variation of an embodiment of an apparatus for growing a plant or a fungus according to the present invention, (a)-(c) show a method for adjusting a distance between holes formed on adjacent plates.
FIG 7 is a plan view for illustrating a variation of an embodiment of an apparatus for growing a plant or a fungus according to the present invention, (a) shows a method for installing a spacer between adjacent plates, and (b) shows the growing component in a state where a spacer is installed between adjacent plates.

### DETAILED DESCRIPTION OF THE EMBODIMENTS

The growing method of the present invention using a growing apparatus aims to solve the problem that a skeletal material such as struts and/or frames constituting a storage shed acts as an obstacle, when a plant or a fungus is accommodated and grown on the storage shed such as a cultivation frame, which is such an apparatus that includes multiple struts, brackets, and a shed-shaped growing component for growing the plant or the fungus, wherein the growing component is arranged on the bracket fixed to each strut. The growing component may be a top-opened water passage for growing a plant, and the growing component is a shed-shaped component for growing the plant or the fungus.

In addition, for example, when the growing component is a water passage, the growing apparatus may include a lid which covers the upper surface of the water passage. The lid is composed of multiple plates slidable on the upper surface of the water passage. The plate constituting the lid may have one or more holes. In addition to the plate having a hole, the lid may also have a spacer without a hole interposed between adjacent plates having a hole.

The material of the plate constituting the lid and the spacer may be any material. For example, the material may be, but not limited to, an opaque material, or may also be a nonopaque material according to practical demands.

In addition, there are no limitations to the structure, number, or material of the struts and/or brackets, even the means for fixing the struts, the means for installing the brackets with respect to the struts, and the like.

Further, the growing apparatus may have a light source for illuminating the plant or fungus, or may not have such a light source.

There may be arbitrary type of light source. LED is preferable for purpose of suppressing heat generation, but the present invention is not limited thereto. The light source may also be an incandescent lamp. In addition, the light source may be an ultraviolet lamp that can also provide a bactericidal effect.

In an embodiment below, as an apparatus for growing a plant, an example is described for the case where the growing component is a top-opened water passage, the growing component is provided with a lid that covers the upper surface of the water passage, the lid is composed of a single plate covering the entire upper surface of the water passage, and the single plate has multiple holes. However, the present invention is not limited thereto.

In a variation of the embodiment, as an apparatus for growing a plant, the apparatus for growing a plant different from that of the embodiment is described as an example in one respect where the lid is composed of multiple plates slidable on the upper surface of the water passage, and each plate has a hole.

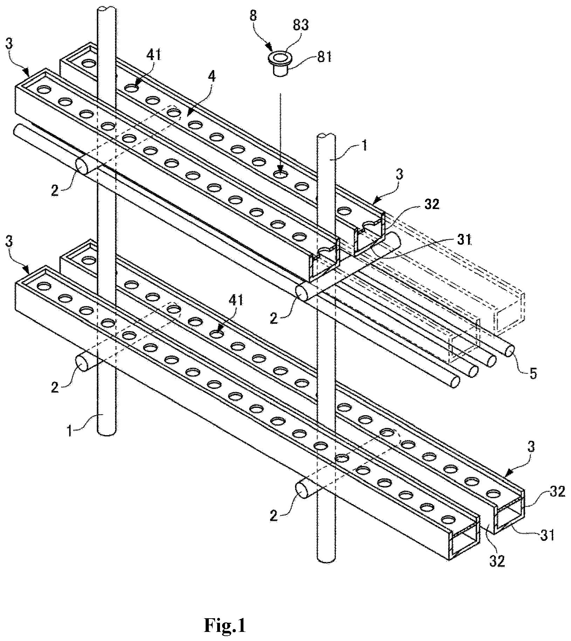

Referring to FIGS. 1 to 3, an embodiment of an apparatus for growing a plant or a fungus, and a method for growing a plant or a fungus according to the present invention will be described.

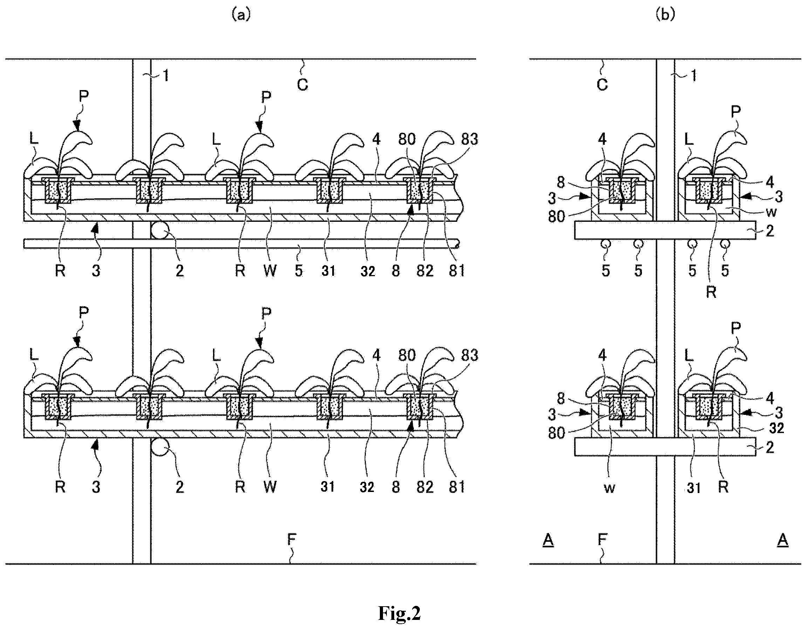

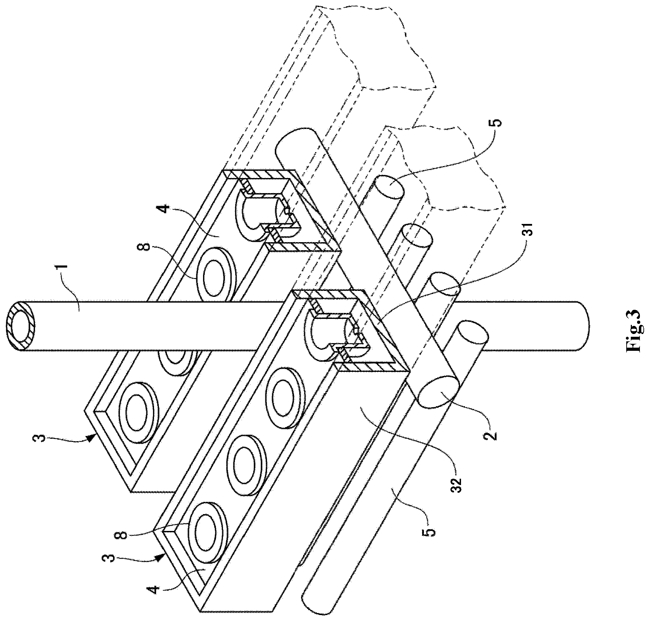

FIG 1 is a schematic perspective view showing an embodiment of an apparatus for growing a plant or a fungus according to the present invention. FIG 2 shows an embodiment of an apparatus for growing a plant or a fungus according to the present invention, (a) is a cross-sectional front view, and (b) is a cross-sectional side view. FIG 3 is an enlarged cross-sectional perspective view of a main part showing an embodiment of an apparatus for growing a plant or a fungus according to the present invention.

As shown in FIGS. 1 to 3, an apparatus for growing a plant or a fungus includes a strut 1, a bracket 2, a shed-shaped growing component 3, a lid 4 and a light source 5, wherein a plant P such as strawberry and/or vanilla planted in a cultivation pot 8 is cultivated indoors. For example, multiple struts 1 are erected between aisle A and aisle A in a state of abutting against a ceiling C and a floor F. The strut 1 is not limited to the shape, such as a cylinder, a column, a square tube and a prism, and/or the material. A tubular beam (not shown) is mounted along the ceiling C, and the upper end of the strut 1 is fixed to the beam. The manner for erecting the strut 1 is not limited. The strut 1 may abut against the floor F but not the ceiling C, or may abut against the ceiling C but not the floor F.

The bracket 2 is attached to each strut 1 and fixed in a horizontal posture. The shape of the bracket 2 is not limited to a cylinder, a column, a square tube, a prism, or the like. In addition, the material of the bracket 2 is not limited to resin and/or metal. In any case, the bracket 2 is in a state of projecting in opposite directions toward each aisle A with each strut 1 as the midpoint. Therefore, the strut 1 is arranged in the middle of the bracket 2. The front end of the bracket 2 is not fixed to the strut 1. The bracket 2 has an orientation orthogonal to the aisle A. Adjacent brackets 2 are parallel or substantially parallel to each other. Multiple brackets 2 are fixed in the length (height) direction of the strut 1 (two in FIGS. 1 and 2, but there may be three or more).

The shed-shaped growing component 3 is a water passage 3 (hereinafter, mainly described as "water passage 3"). The water passage is a top-opened U-shaped groove, and includes a bottom 31 and a pair of side portions 32 protruding upward from both edges of the bottom 31. Water and/or liquid fertilizer (hereinafter, described as "water") W for growing the plant P flows in the water passage 3. The lower surface of the bottom 31 of the water passage 3 is supported on the bracket 2. Because the bracket 2 projects in opposite directions with the strut 1 as the midpoint, the water passage 3 is arranged in two rows for example with the strut 1 sandwiched therebetween. By arranging the two rows, i.e., one row on each side of the strut sandwiched therebetween, leaves or the like protruding from the cultivation pot can greatly hang down toward the side of the aisle A as the strawberry or the like grows. In the case where the leaves or the like do not protrude from the cultivation pot as the plant or fungus grows, multiple growing components may be provided on each side of the sandwiched strut. The water passage 3 may be formed as a single piece from the upstream end to the downstream end, or may be formed by connecting multiple pieces.

Further, as shown in FIG 1, it is preferable not to provide a shield that shields the growing components provided on both side of the sandwiched strut 1. Without providing a shield, it is possible to check the condition of the plant or fungus grown on the growing components of the opposite side with the strut sandwiched therebetween even from the aisle A of one side. In addition, in the case of a plant that requires pollination, such as strawberry, the pollination behavior by bees and the like can be efficiently performed regardless of location restrictions by not providing a shield.

In addition, in order to flow the water W in the water passage 3, the water passage3 has a slight gradient. Therefore, the brackets 2 fixed to the adjacent struts 1 are provided with a slight height difference. A water supply pipe (not shown) for supplying water W is arranged on the upper surface side of the upstream side of the water passage 3. A drain pipe (not shown) for draining water W is arranged at the bottom 31 on the downstream side of the water passage 3.

The lid 4 is composed of one plate to cover the upper surface of the water passage 3, to be precise, a position slightly lower than the upper surface. Protrusions and/or projections (not shown) for supporting both side edges of the lid 4 are provided on the inner surfaces of both side portions 32 of the water passage 3. Multiple holes (hereinafter, also referred to as "pot insertion holes") 41 into which the cultivation pot 8 for growing the plant P is inserted are formed on the lid (one plate) 4. The multiple holes only need to include at least two holes (a first hole and a second hole). Here, three or more holes are formed in a row on the lid 4. The pot insertion holes 41 of the lid 4 are formed, for example, along a straight line at equal intervals. The lid 4 is made of a material that can reflect light from above and can prevent penetration of the light through the water passage 3, for example, an aluminum composite material.

The cultivation pot 8 is loaded and unloaded at position of the pot insertion hole 41 of the lid 4. The cultivation pot 8 accommodates a medium 80 in which a sprouted plant P is planted. The cultivation pot 8 has a cylindrical portion 81, a bottom portion 82 provided on the bottom surface of the cylindrical portion 81, and a flange portion 83 protruding outward from the upper edge of the cylindrical portion 81. The bottom side and bottom portion 82 of the cylindrical portion 81 of the cultivation pot 8 are immersed in the water W of the water passage 3. At least any one of the cylindrical portion 81 and the bottom portion 82 of the cultivation pot 8 is formed with a slit and/or a small hole (reference number omitted), and the roots R of the plant P can protrude from the slit or the small hole. The flange portion 83 of the cultivation pot 8 is supported on the outer periphery of the pot insertion hole 41 of the lid 4.

The light source 5 illuminates the plant P planted in the medium 80 of the cultivation pot 8. The light source 5 is a straight-tube LED lamp as shown, a flat-panel LED lamp not shown, or the like. The LED lamp illuminates the plant P with the optimal wavelength depending on the growth stage of the plant P. The straight-tube LED lamp is fixed on the lower side of the bracket 2. Since there is no water passage 3 on the lower side of the lowermost bracket 2 and no plant P is grown, no LED lamp is fixed. Since there is no bracket 2 above the uppermost water passage 3, the LED lamp, although not shown, is fixed to the beam near the ceiling C. The LED lamp may be covered by a reflection plate (not shown) on the upper side so as to irradiate light downward.

Here, a method for growing a plant P using the apparatus for growing a plant or a fungus is described. A water passage 3 is fixed on a bracket 2 of the apparatus for growing a plant or a fungus, the upper surface of the water passage 3 is covered by a lid 4, water W flows in the water passage 3, and a light source 5 emits light. A cultivation pot 8 is inserted into a pot insertion hole 41 of the lid 4. In the operation of inserting the cultivation pot 8 into the pot insertion hole 41 of the lid 4, since there is no strut 1 on the side of the aisle A, the strut 1 does not become an obstacle, and this operation can be performed successfully.

The cultivation pot 8 accommodates a medium 80 in an ungerminated state after sowing or a medium 80 in a germinated state. In any case, the lower side of the cultivation pot 8 is in a state of being immersed in the water W of the water passage 3, and the medium 80 is soaked by the water W. A seed in the medium 80 germinates with roots R protruding out. The germinated plant P is cultivated by receiving light from the light source 5, and leaves L become larger. Since the lid 4 is formed of a material that can reflect light from above, the leaves L of the plant P not only receive light from the light source 5 on the upper side, but also light reflected from the lid 4 on the lower side. Since the lid 4 is formed of a material that can prevent penetration of the light through the water passage 3, algae will not grow in the water W of the water passage 3.

The growing plant P bears fruit and then it is harvested. That is, the cultivation pot 8 is pulled out from the pot insertion hole 41 of the lid 4. Since there is no strut 1 on the side of the aisle A in this operation, the strut 1 does not act as an obstacle, and this operation can be performed successfully. A next cultivation pot 8, i.e. a cultivation pot 8 accommodating the seeded medium 80 or the germinated medium 80, is inserted into the pot insertion hole 41 of the lid 4 from which the cultivation pot 8 has been pulled out, and a next plant P is to be grown.

It should be noted that in an embodiment of the growing apparatus 1 described above, the lid 4 for one growing component 3 may be composed of one plate, but the lid may also be composed of multiple plates. In addition, in the above-mentioned embodiment, multiple pot insertion holes (holes) 41 are formed in one plate (single plate) constituting the lid. Therefore, the spacing distance between the holes formed on the lid 4 is not changeable, but the lid may be configured to be capable of changing the spacing distance between the holes formed thereon. For example, the lid 4 may also be composed of multiple plates at least including a first plate and a second plate. Further, a pot insertion hole may be formed on each of the multiple plates. Here, there is, for example, one pot insertion hole provided in each of the multiple plates, but the present invention is not limited thereto. There may be multiple pot insertion holes if necessary.

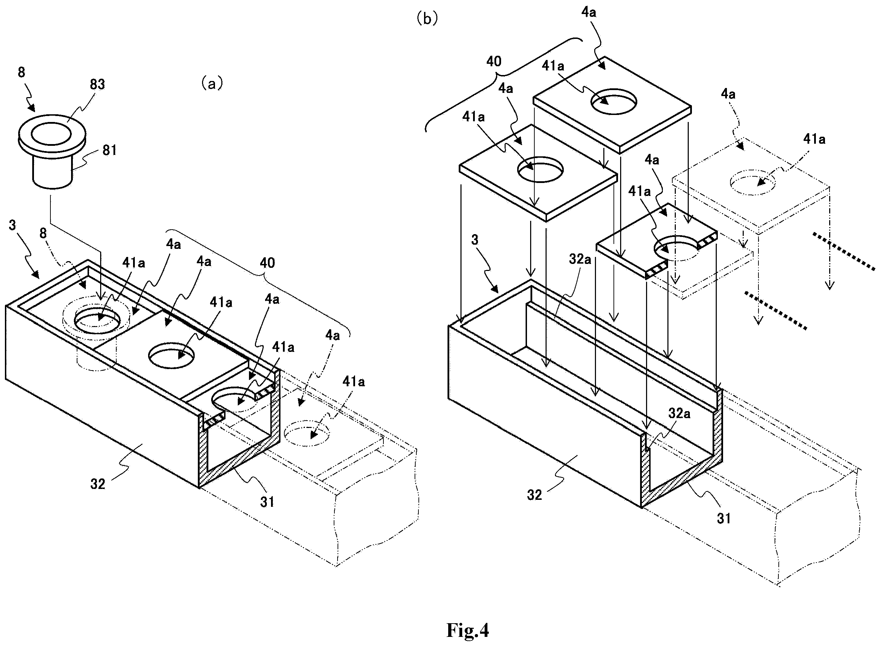

Hereinafter, the growing apparatus having the lid of such structure will be described in detail as a variation of the embodiment with reference to FIGS. 4 to 7.

The width of the growing component (the length of the water passage), the number of plates, and the length of the plate can be arbitrary. For example, they can be adjusted to an appropriate range according to the object to be cultivated (for example, the degree of extension of branches and leaves when the object is cultivated). For example, the width of the growing component (the length of the water passage) is generally about 200 mm to 20000 mm, preferably about 200 mm to 8000 mm, and more preferably about 200 mm to 4000 mm. The length of the plate may be, for example, about 50 mm to 2000 mm, preferably about 50 mm to 1300 mm, and more preferably about 50 mm to 650 mm.

For example, in an embodiment where the object to be cultivated is strawberry, the width of the growing component (the length of the water passage) may be about 200 mm to 20000 mm, preferably about 200 mm to 4000 mm, and more preferably about 200 mm to 1300 mm. In addition, the number of the multiple plates (or the number of the pot insertion holes) provided within the width of the growing component is, for example, about 1 to 100, preferably about 1 to 20, and more preferably about 1 to 10. In addition, the length of the plate is, for example, about 50 mm to 2000 mm, preferably about 50 mm to 1300 mm, and more preferably about 50 mm to 650 mm.

For example, in an embodiment where the object to be cultivated is tomato and/or chili, the width of the growing component (the length of the water passage) may be about 200 mm to 20000 mm, preferably about 200 mm to 8000 mm, and more preferably about 200 mm to 4000 mm. In addition, the number of the multiple plates (or the number of the pot insertion holes) provided within the width of the growing component is, for example, about 1 to 100, preferably about 1 to 20, and more preferably about 1 to 10. In addition, the length of the plate is, for example, about 50 mm to 2000 mm, preferably about 50 mm to 1300 mm, and more preferably about 50 mm to 650 mm.

The width of the spacer arranged between the plates can be appropriately adjusted within the range of about 50 mm to 500 mm according to the cultivation condition.

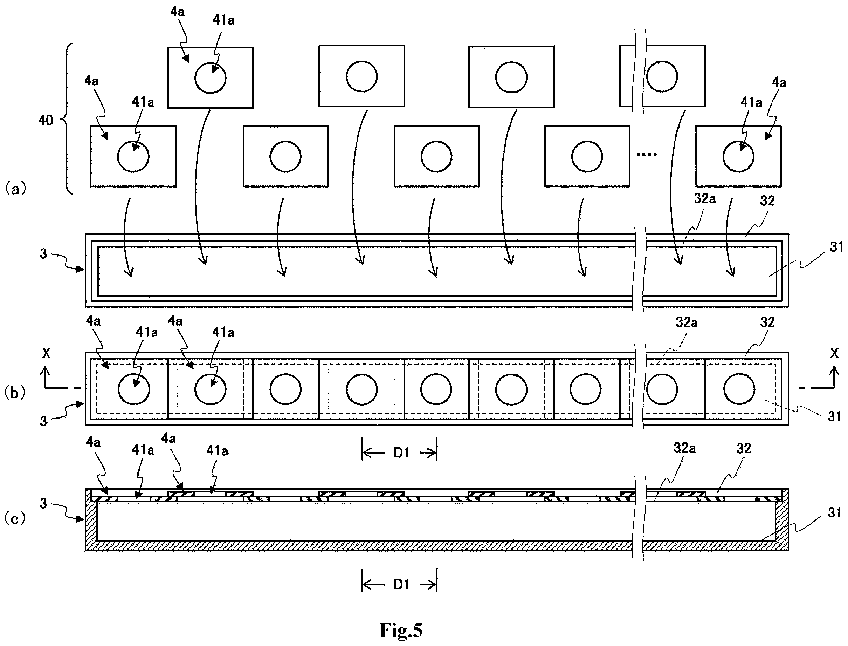

FIG 4 is a schematic perspective view for illustrating a variation of an embodiment of an apparatus for growing a plant or a fungus according to the present invention, (a) shows a state in which a lid is installed on a growing component, and (b) shows a state in which the lid is separated from the growing component. FIG 5 is a view for illustrating a variation of an embodiment of an apparatus for growing a plant or a fungus according to the present invention, (a) shows a method for installing multiple plates as a lid to a growing component, (b) shows a top view of the growing component in a state where the multiple plates as the lid are installed to the growing component, and (c) shows the structure of the X-X line cross section of (b).

Here, each of the multiple plates 4a constituting the lid 40 is the same as the lid 4 (one plate) of the first embodiment, and is made of a material that can reflect light from the light source and can prevent penetration of the light from the light source through the growing component (the water passage) 3, for example, an aluminum composite material.

In this variation, as shown in FIGS. 4 (a) and (b), each of the multiple plates 4a forming the lid 40 of the growing component 3 has a pot insertion hole 41a for loading and unloading the cultivation pot 8, and is formed in such a shape that is supported by a stepped portion 32a formed on the upper inner surface of the side portion 32 of the growing component 3. In the embodiment as shown, the length of the plate along the longitudinal direction of the growing component is longer than the diameter of the circular flange portion 83 of the cultivation pot 8, and is shorter than twice the diameter of the circular flange portion 83. However, the present invention is not limited thereto. The length of the plate along the longitudinal direction of the growing component can be arbitrarily set according to the type of plant or fungus to be cultivated. In addition, each of the multiple plates forming the lid 40 is not limited to having only one pot insertion hole 41a, but may also have multiple pot insertion holes 41a.

The lid 40 with such a structure can slide each plate 4a along the longitudinal direction of the growing component 3 under the condition that the multiple plates 4a are supported on the stepped portions 32a of the side portions 32 of the growing component 3, so that the distance between adjacent plates 4a is thus adjusted.

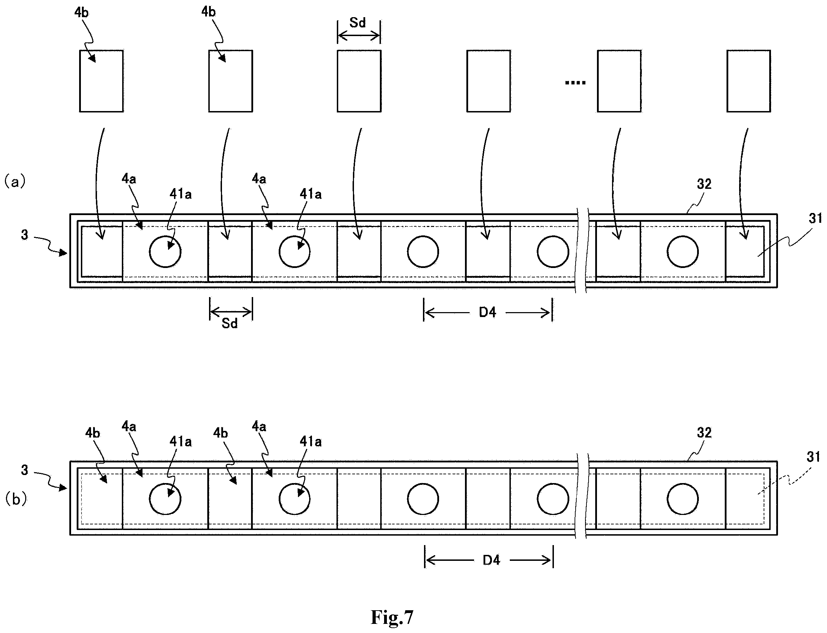

Further, like the plate 4a, the lid 40 may also include a spacer 4b formed of an aluminum composite material (see FIG 7(a)). The spacer 4b fills the gap between adjacent plates by insertion of itself between the adjacent plates. When the multiple plates 4a constituting the lid 40 are arranged on the stepped portions 32a of the growing component 3 along the longitudinal direction thereof at an arrangement spacing that is longer than the dimension of the plates 4 along the longitudinal direction of the growing component, a gap will be presented between adjacent plates 4a. In this case, by providing the spacer 4b between adjacent plates 4a, the light from the light source is prevented from entering the growing component 3, and as a result, the production of algae can be suppressed.

It should be noted that when the multiple plates 4a constituting the lid 40 are arranged on the stepped portions 32a of the growing component 3 along the longitudinal direction thereof at an arrangement spacing that is shorter than the dimension of the plates 4 along the longitudinal direction of the growing component, as shown in FIGS. 4(a) and (b), these plates are arranged so that the opposite side ends of adjacent plates 4a overlap each other by way of one above the other.

Specifically, when multiple plates 4a are sequentially arranged on the upper surface of the growing component 3 from one end side (left end of the page) as shown in FIG4 (a), the odd-numbered plates 4a are arranged directly on the stepped portions 32a of the growing component 3 at a predetermined interval (a distance shorter than the dimension of the plates 4a along the longitudinal direction of the growing component) from one end side, and the even-numbered plates 4a are arranged on adjacent odd-numbered plates 4a by a manner of being spaced by the adjacent odd-numbered plates 4a from one end side as shown in FIG 5(a). As a result, as shown in FIGS. 5(b) and (c), the multiple plates 4a as the lid 40 can be arranged on the stepped portions 32a of the growing component 3 at an arrangement spacing D1 shorter than the dimension of the plates along the longitudinal direction of the growing component.

Next, a method for growing a plant P using the growing apparatus according to the variation of the first embodiment will be described. In this method, the operation of covering the open upper surface of the growing component (water passage) 3 with a lid is different from the method according to the first embodiment. Here, the plant P is, for example, strawberry, but the plant is not limited thereto, and may be other fruits or vegetables. Alternatively, the object to be grown using the growing apparatus according to the variation of the first embodiment may be a fungus instead of a plant.

Specifically, in this method, since the arrangement spacing of the multiple plates 4a constituting the lid can be adjusted, if the plant P becomes larger due to growth, the distance between adjacent plates 4a can be expanded according to the size of the plant during growth, so that the growing environment of the growing apparatus can be adapted to the state corresponding to the growth stage of the plant.

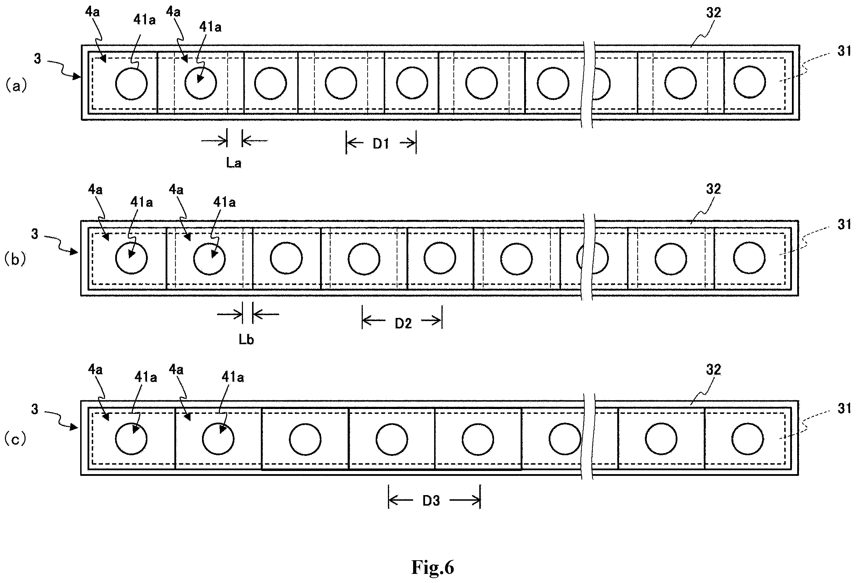

Hereinafter, the growing method using the growing apparatus according to the variation will be specifically described with reference to FIGS. 6 and 7.

First, when beginning to grow a plant, as shown in FIG 6(a), multiple plates 4a are arranged as the lid 40 in a manner of covering the upper surface of the growing component 3. In this case, even if the plant accommodated in the cultivation pot 8 germinates, it is still in a young state that has not yet protruded from the cultivation pot 8. Therefore, the arrangement spacing D1 of the multiple plates 4a is set so that the ends of the adjacent plates 4a overlap each other by a predetermined size La.

In this way, the multiple plates 4a as the lid 40 are arranged on the upper surface of the growing component 3 at the arrangement spacing D1 so that the ends of the adjacent plates 4a overlap each other by the predetermined size La, and then the cultivation pot 8 is inserted into the pot insertion hole 41a of each plate 4a.

When the plant P accommodated in the cultivation pot 8 grows in this state and leaves and the like protrude from the cultivation pot 8, to prevent the plant P from contacting between adjacent cultivation pots 8, the arrangement spacing is altered, by sliding the multiple plates 4a on the stepped portions 32a of the growing component 3, from the arrangement spacing D1 to an slightly wider arrangement spacing D2.

Further, when the plant grows, the arrangement spacing is further increased from the arrangement spacing D2 to an even wider arrangement spacing D3. For example, when the arrangement spacing D3 is the same as the dimension of the plates 4a along the longitudinal direction of the growing component, as shown in FIG 6(c), the multiple plates 4a are not partially overlapped, but sequentially arranged without a gap on the stepped portions 32a of the growing component 3 from one end side thereof to the other.

If necessary, hereinafter, when the plant grows further, to prevent the plant P from contacting between the adjacent cultivation pots 8, the arrangement spacing of the multiple plates 4a may be altered, by sliding the multiple plates 4a on the stepped portions 32a of the growing component 3, to an arrangement spacing D4 even more wider than the arrangement spacing D3 that is the same as the dimension of the plates 4a along the longitudinal direction of the growing component. In this case, preferably, as shown in FIGS. 7(a) and 7(b), a spacer 4b having a corresponding width Sd is arranged in a gap portion (width Sd) presented between adjacent plates 4a so that the light from the light source does not enter the growing component 3 which act as a water passage. It should be noted that multiple types of spacers 4b having different widths Sd may be provided. As a result, the arrangement spacing of the multiple plates 4a can be flexibly adapted to a width wider than the dimension of the plates 4a along the longitudinal direction of the growing component.

Although one embodiment of an apparatus for growing a plant or a fungus, and a method for growing a plant or a fungus according to the present invention and even the variation thereof have been described above, the present invention is not limited to the above-mentioned embodiment and the variation thereof. Any modifications or improvements made within the scope of the subject of the present invention are encompassed in the present invention.

For example, an apparatus for growing a plant or a fungus, and a method for growing a plant or a fungus according to the above-described embodiment and the variation thereof are used for hydroponic cultivation, the shed-shaped growing component 3 is used as a water passage. However, an apparatus for growing a plant or a fungus can be used for growing a fungus such as mushrooms (hereinafter, described as mushrooms). In this case, the shed-shaped growing component 3 is not used as a water passage, but as a shed-shaped component for fungal bed cultivation.

The shed-shaped growing component 3 for fungal bed cultivation is a shed-shaped component in which multiple containers such as bottles and/or bags filled with a medium for growing mushrooms are arranged. If the growing component 3 has a top-opened U-shaped groove shape, when the upper surface is covered by a lid 4 composed of one plate having a hole 41 or by a lid 40 composed of multiple plates 4a having a hole 41a, a container filled with the medium may be inserted into the hole 41 or 41a. Alternatively, the shed-shaped growing component 3 for fungal bed cultivation may not have a U-shaped groove shape, but may have a flat plate shape of a tray in which multiple containers are arranged.

In any case, the growing component 3 may not only have a narrow width as shown, but also a wide width, and may or may not be provided with the side portion 32 in the longitudinal direction. In addition, the growing component 3 may not have a U-shaped groove shape but a shed-shaped component on which a plate-shaped medium is supported.

In addition, in the apparatus for growing a plant or a fungus as shown, the bracket 2 projects in opposite directions with the strut 1 as the midpoint, shed-shaped growing components 3 are arranged on two sides of the strut 1, and the strut 1 is sandwiched between two shed-shaped growing components 3. However, the bracket 2 may only project towards one direction of the strut 1, and the shed-shaped growing component 3 may be arranged on only one side of the strut 1 as one shed-shaped growing component 3. On the contrary, the bracket 2 may be longer than the length as shown, and project in opposite directions with the strut 1 as the midpoint, and multiple shed-shaped growing components 3 may be arranged on both sides of the strut 1.

The bracket 2 as shown is attached to the strut 1 and is fixed. However, two brackets 2 may be included as a group and the brackets 2 sandwich the strut 1. In particular, when the bracket 2 is prismatic and the strut 1 is also prismatic, the bracket 2 comes into surface contact with the strut 1, so that the end surface of the bracket 2 can be stably fixed to the side surface of the strut 1.

In addition, the shed-shaped growing component 3 as shown has a width such that a row of pot insertion holes 41 are provided on the lid 4. However, the shed-shaped growing component 3 may also have a width such that multiple pot insertion holes 41 are provided in multiple rows and/or in a staggered manner on the lid 4 composed of one plate. Further, the shed-shaped growing component 3 may also have a width such that pot insertion holes 41a are provided in multiple rows and/or in a staggered manner on each of the multiple plates 4a constituting the lid 40.

In the apparatus for growing a plant or a fungus as shown, the shed-shaped growing components 3 are arranged in two layers in the up-down direction. However, the shed-shaped growing components 3 may be arranged in three or more layers, or may be arranged in only one layer. When the shed-shaped growing components 3 are arranged in only one layer, the light source 5 is not installed to the bracket 2 for fixing the shed-shaped growing component 3, the light source 5 may be installed to the ceiling C, or the bracket 2 installed with the light source 5 may be fixed on the upper side of the shed-shaped growing components 3.

In the embodiment in which the apparatus for growing a plant or a fungus is used for hydroponic cultivation, the lid 4 composed of one plate or the lid 40 composed of multiple plates is made of a material that can reflect light and can prevent penetration of the light through the shed-shaped growing component 3. However, if it is not necessary to prevent algae from growing in the water W of the shed-shaped growing component 3, or if the plant P does not need to be exposed to light from the downside, the lid 4 composed of one plate or the lid 40 composed of multiple plates may be made of a material without a function of reflecting light and preventing penetration of the light through the shed-shaped growing component 3.

In the above embodiment, the strut 1 in a state of abutting against the ceiling C and the floor F. However, the strut 1 may be erected by providing a pedestal thereto, or the strut 1 may be erected by burying the lower part of the strut 1 under the floor.

In the above embodiment, the apparatus for growing a plant or a fungus includes a light source 5 such as an LED lamp. However, by using the existing light source 5 indoors, the light source 5 such as the LED lamp may not be provided. In addition, the light source 5 may be changed from the LED lamp to other lamp depending on the plant P.

In the above embodiment, the hole 41 or the hole 41a formed in one plate constituting the lid 4 or multiple plates 4a constituting the lid 40a is used as a pot insertion hole. However, when the cultivation pot 8 used for hydroponic cultivation is arranged in a manner to be fixed in the shed-shaped growing component 3, the hole 41 and the hole 41a are not pot insertion holes, but used to allow the stem protruding from the cultivation pot 8 to penetrate. Further, even the apparatus for growing a plant or a fungus used for hydroponic cultivation does not necessarily have to be provided with the lid 4, 40.

In summary, an apparatus for growing a plant or a fungus includes:
multiple struts 1;
a bracket 2 fixed to each strut 1; and
a shed-shaped growing component 3 arranged on the bracket 2 and used for growing a plant or a fungus.

According to the growing apparatus, the shed-shaped growing component 3 is mounted on the bracket 2 fixed to the strut 1, so that the plant P or fungus grown in the shed-shaped growing component 3 is placed in front of the strut 1. Since the front end of the bracket 2 is not fixed to the strut 1, the strut 1 does not act as an obstacle in various operations.

In the growing apparatus, the shed-shaped growing component 3 is a top-opened water passage 3 for growing a plant.

According to the growing apparatus, the shed-shaped growing component 3 is a water passage 3, so that it can grow the plant P for hydroponic cultivation well.

In the growing apparatus, a lid 4, 40 is provided, wherein the lid 4, 40 covers the upper surface of the water passage 3 and has multiple holes 41, 41a along the water passage 3, and the holes at least include a first hole and a second hole.

By providing the growing apparatus with the lid 4 and 40 having multiple holes 41 and 41a, the cultivation pot 8 in which the plant P is planted can be inserted into the holes 41 and 41a to grow the plant P.

In the growing apparatus, a distance between the first hole 41a and the second hole 41a on the lid 40 is configured to be variable.

Since a distance between the first hole 41a and the second hole 41a on the lid is variable, the growing apparatus can prevent the plant P of the cultivation pot 8 inserted into the hole 41a from contacting each other as the plant grows.

In the growing apparatus, the lid 40 includes a first plate 4a having the first hole 41a and a second plate 4a having the second hole 41a, and the first plate 4a and the second plate 4a are movable along the water passage 3.

Since the lid 40 includes the first plate 4a having the first hole 41a and the second plate 4a having the second hole 41a, and the first plate 4a and the second plate 4a are movable along the water passage 3, the distance between the first hole 41a and the second hole 41a on the lid 40 can be easily adjusted according to the growing apparatus.

In the growing apparatus, the lid 40 further includes a spacer 4b provided between the first plate 4a and the second plate 4a.

The lid 40 further includes the spacer 4b provided between the first plate 4a and the second plate 4a, so that the growing apparatus can prevent a gap from presenting between the first hole 41a and the second hole 41a on the lid 40, thus suppressing the production of algae.

In the growing apparatus, the lid 4, 40 is made from a material that can reflect light from above and can prevent penetration of the light through the water passage.

By reflecting light from above by the lid 4, 40, the growing apparatus also illuminates the plant P with the light from the lower side of the plant to promote the growth. By making the lid 4, 40 from a material that can prevent penetration of the light from above through the shed-shaped growing component 3, the growing apparatus can prevent algae and the like from growing in the water W of the shed-shaped growing component 3.

In the growing apparatus, the shed-shaped growing component 3 includes a medium for growing a fungus.

The shed-shaped growing component 3 includes a medium for growing a fungus, so that the growing apparatus can grow a fungus such as mushrooms well.

In the growing apparatus, the bracket 2 projects in opposite directions with each strut 1 as the midpoint; and the shed-shaped growing components 3 are arranged in multiple rows in a manner of sandwiching the strut 1.

According to the growing apparatus, the number of plants P or fungi to be grown can be increased by arranging the shed-shaped growing components 3 on both sides of the strut 1.

In the growing apparatus, multiple brackets 2 are fixed in the up-down direction of each strut 1.

By fixing multiple brackets 2, the growing apparatus can be provided with multi-layer shed-shaped growing components 3.

In the growing apparatus, the apparatus for growing a plant or a fungus is provided with a light source 5, wherein the light source 5 is installed on the bracket 2 to illuminate the plant P grown in the shed-shaped growing component 3 below.

In the growing apparatus, the light source 5 can illuminate the plant P grown in the shed-shaped growing component 3.

In the growing apparatus, the strut 1 is supported in a state of abutting against the floor F and the ceiling C.

In the growing apparatus, the strut 1 is in a state of abutting against the floor F and the ceiling C, so that the strut 1 is erected in a stable state. A method for growing a plant or a fungus according to the present invention includes: a step of accommodating a plant or a fungus in the growing component of the growing apparatus according to the present invention, and a step of growing the plant or the fungus.

### Description of reference numbers

1: strut; 2: bracket; 3: shed-shaped growing component (water passage); 4, 40: lid; 41, 41a: hole (pot insertion hole); 5: light source; 8: cultivation pot; A: aisle; C: ceiling; F: floor: P: plant; W: water.

## Claims

1. A method for growing a plant or a fungus (P), comprising:
a step of accommodating the plant or the fungus (P) in a growing component (3) of a growing apparatus, said growing apparatus comprising:
multiple struts;
a bracket fixed to each strut; and
wherein the growing component (3) is mounted on the bracket and is shed-shaped and is a top-opened water passage for growing the plant or the fungus (P);
said growing apparatus further comprising a lid (4) that covers an upper surface of the water passage (3) and has multiple holes (41) along the water passage (3), and the holes at least comprise a first hole (41a) and a second hole (41a);
wherein the lid (4) includes a first plate (4a) having the first hole (41a) and a second plate (4a) having the second hole (41a), the first plate and the second plate are movable along the water passage (3),
wherein the lid (4) is made of an aluminum composite material that reflect light from above and prevent penetration of the light through the water passage (3),
wherein a cultivation pot (8) comprising a cylindrical portion (81) and a flange portion (83) protruding outward from an upper edge of the cylindrical portion (81) is loadably and unloadably inserted in each of the first hole (41a) and the second hole (41a);
the method further comprising
a step of growing the plant or the fungus (P) including:
a step of partially overlapping the first plate (4a) and the second plate (4a) to grow the plant or the fungus (P) during a first period so as to provide a first distance between the first hole (41a) and the second hole (41a); and
a step of partially overlapping the first plate (4a) and the second plate (4a) to grow the plant or the fungus (P), during a second period that is after the growth in the first period, so as to provide a second distance between the first hole (41a) and the second hole (41a) that is greater than the first distance
a step of arranging the first plate (4a) and the second plate (4a), so that the first plate (4a) and the second plate (4a) do not partially overlap and ends of the first plate (4a) and the second plate (4a) contact each other, to grow the plant or the fungus (P), during a third period that is after the growth in the second period, so as to provide a third distance between the first hole (41a) and the second hole (41a) that is greater than the second distance; and
a step of inserting a spacer between the first plate (4a) and the second plate (4a) to grow the plant or the fungus (P), during a fourth period that is after the growth in the third period, so as to provide a fourth distance between the first hole (41a) and the second hole (41a) that is greater than the third distance.

2. The method for growing a plant or a fungus (P) according to claim 1, wherein the plant or the fungus (P) is strawberry.

3. The method for growing a plant or a fungus (P) according to claim 1 or 2,
wherein the bracket (2) projects in opposite directions around the strut (1) as the midpoint, wherein the shed-shaped growing components (3) are arranged in multiple rows in a manner of pinching the struts (1) there between,
wherein multiple brackets (2) are fixed on each strut (1) in the up/down direction thereof, and
wherein the method further include a step of harvesting the plant or the fungus (P).

## Patentansprüche

1. Verfahren zum Anbau einer Pflanze oder eines Pilzes (P), Schritte umfassend, bei denen man:
die Pflanze oder den Pilz (P) in ein Anbauelement (3) einer Anbauvorrichtung einbringt, wobei die Anbauvorrichtung folgendes umfasst:
mehrere Streben;
einen an jeder Strebe befestigten Halter, und
wobei das Anbauelement (3) an dem Halter angebracht und schalenförmig ist und ein nach oben geöffneter Wasserdurchlass für den Anbau der Pflanze oder des Pilzes (P) ist;
wobei die Anbauvorrichtung ferner folgendes umfasst:
einen Deckel (4), der eine obere Fläche des Wasserdurchlasses (3) abdeckt und mehrere Löcher (41) entlang des Wasserdurchlasses (3) aufweist, wobei die Löcher mindestens ein erstes Loch (41a) und ein zweites Loch (41a) umfassen;
wobei der Deckel (4) eine erste Platte (4a) mit dem ersten Loch (41a) und eine zweite Platte (4a) mit dem zweiten Loch (41a) umfasst, wobei die erste Platte und die zweite Platte entlang des Wasserdurchgangs (3) beweglich sind,
wobei der Deckel (4) aus einem Aluminiumverbundmaterial besteht, das Licht von oben reflektiert und das Eindringen von Licht durch den Wasserdurchlass (3) verhindert,
wobei ein Kultivierungsbehälter (8), der einen zylindrischen Abschnitt (81) und einen Flansch-Abschnitt (83), welcher von einem oberen Rand des zylindrischen Abschnitts (81) nach außen vorsteht, umfasst, belade- und entladefähig in jedes erste Loch (41a) und jedes zweite Loch (41a) eingesetzt ist;
wobei das Verfahren ferner umfasst:
einen Schritt des Anzüchtens der Pflanze oder des Pilzes (P), einschließlich eines Schritts, bei dem man die erste Platte (4a) und die zweite Platte (4a) teilweise überlappt, um die Pflanze oder den Pilz (P) während einer ersten Periode so wachsen zu lassen, dass ein erster Abstand zwischen dem ersten Loch (41a) und dem zweiten Loch (41a) hergestellt wird; und
eines Schritts, bei dem man die erste Platte (4a) und die zweite Platte (4a) teilweise überlappt, um die Pflanze oder den Pilz (P) während einer zweiten Periode, die dem Wachstum der ersten Periode nachfolgt, so wachsen zu lassen, dass ein zweiter Abstand zwischen dem ersten Loch (41a) und dem zweiten Loch (41a) hergestellt wird, wobei dieser größer ist als der erste Abstand;
eines Schritt des Anordnens der ersten Platte (4a) und der zweiten Platte (4a), sodass die erste Platte (4a) und die zweite Platte (4a) sich nicht teilweise überlappen und die Enden der ersten Platte (4a) und der zweiten Platte (4a) einander berühren, um die Pflanze oder den Pilz (P) während einer dritten Periode, die dem Wachstum der zweiten Periode nachfolgt, so wachsen zu lassen, dass ein dritter Abstand zwischen dem ersten Loch (41a) und dem zweiten Loch (41a) hergestellt wird, wobei dieser größer ist als der zweite Abstand;
eines Schritts des Einsetzens eines Abstandshalters zwischen die erste Platte (4a) und die zweite Platte (4a), um die Pflanze oder den Pilz (P) während einer vierten Periode, die dem Wachstum der dritten Periode nachfolgt, so wachsen zu lassen, dass ein vierter Abstand zwischen dem ersten Loch (41a) und dem zweiten Loch (41a) hergestellt wird, wobei dieser größer ist als der dritte Abstand.

2. Verfahren zum Anbau einer Pflanze oder eines Pilzes (P) nach Anspruch 1, wobei die Pflanze oder der Pilz (P) eine Erdbeere ist.

3. Verfahren zum Anbau einer Pflanze oder eines Pilzes (P) nach Anspruch 1 oder 2,
wobei der Halter (2) in entgegengesetzten Richtungen um die Strebe (1) als Mittelpunkt vorsteht,
wobei die schalenförmigen Anbauelemente (3) in mehreren Reihen angeordnet sind, so dass die Streben (1) zwischen diesen eingeklemmt sind,
wobei mehrere Halter (2) an jeder Strebe (1) in deren Auf-/Abwärtsrichtung befestigt sind, und wobei das Verfahren ferner einen Schritt umfasst, bei dem man die Pflanze oder den Pilz erntet (P).

## Revendications

1. Procédé de culture d'une plante ou d'un champignon (P) comprenant :
une étape consistant à placer la plante ou le champignon (P) dans un composant de culture (3) d'un appareil de culture, ledit appareil de culture comprenant :
plusieurs montants ;
un support fixé à chaque montant ; et
dans lequel le composant de culture (3) est monté sur le support et a une forme de magasin et est un passage d'eau à dessus ouvert pour la culture de la plante ou du champignon (P) ;
ledit appareil de culture comprenant en outre un couvercle (4) qui couvre une surface supérieure du passage d'eau (3) et qui comporte plusieurs trous (41) le long du passage d'eau (3), et ces trous comprennent au moins un premier trou (41a) et un deuxième trou (41a) ;
dans lequel le couvercle (4) comprend une première plaque (4a) qui comporte le premier trou (41a) et une deuxième plaque (4a) qui comporte le deuxième trou (41a), la première plaque et la deuxième plaque sont mobiles le long du passage d'eau (3),
dans lequel le couvercle (4) est fait d'un matériau composite à base d'aluminium qui réfléchit la lumière arrivant par le dessus et qui empêche la pénétration de la lumière dans le passage d'eau (3),
dans lequel un pot de culture (8) comprenant une partie cylindrique (81) et une partie de bride (83) faisant saillie vers l'extérieur depuis un bord supérieur de la partie cylindrique (81) est inséré, en pouvant être chargé et déchargé, dans chacun des premier trou (41a) et deuxième trou (41a) ;
le procédé comprenant en outre une étape de culture de la plante ou du champignon (P) incluant :
une étape consistant à faire chevaucher partiellement la première plaque (4a) et la deuxième plaque (4a) pour faire croître la plante ou le champignon (P) pendant une première période de façon à établir une première distance entre le premier trou (41a) et le deuxième trou (41 a) ; et
une étape consistant à faire chevaucher partiellement la première plaque (4a) et la deuxième plaque (4a) pour faire croître la plante ou le champignon (P) pendant une deuxième période qui se situe après la croissance de la première période, de façon à établir une deuxième distance entre le premier trou (41a) et le deuxième trou (41a) qui est plus grande que la première distance ;
une étape consistant à agencer la première plaque (4a) et la deuxième plaque (4a) de telle manière que la première plaque (4a) et la deuxième plaque (4a) ne se chevauchent pas et que les extrémités de la première plaque (4a) et de la deuxième plaque (4a) sont en contact l'une avec l'autre, pour faire croître la plante ou le champignon (P) pendant une troisième période qui se situe après la croissance de la deuxième période, de façon à établir une troisième distance entre le premier trou (41a) et le deuxième trou (41a) qui est plus grande que la deuxième distance ; et
une étape consistant à insérer une entretoise entre la première plaque (4a) et la deuxième plaque (4a) pour faire croître la plante ou le champignon (P) pendant une quatrième période qui se situe après la croissance de la troisième période, de façon à établir une quatrième distance entre le premier trou (41a) et le deuxième trou (41a) qui est plus grande que la troisième distance.

2. Procédé de culture d'une plante ou d'un champignon (P) selon la revendication 1, dans lequel la plante ou le champignon (P) est la fraise.

3. Procédé de culture d'une plante ou d'un champignon (P) selon la revendication 1 ou 2, dans lequel le support (2) fait saillie dans des directions opposées autour du montant (1) comme point médian,
dans lequel les composants de culture en forme de magasin (3) sont disposés en plusieurs rangées de manière à serrer les montants (1) entre eux,
dans lequel plusieurs supports (2) sont fixés sur chaque montant (1) dans la direction verticale de celui-ci, et
dans lequel le procédé comprend en outre une étape de récolte de la plante ou du champignon (P).
